# EUROPEAN PATENT APPLICATION

(11) **EP 3 222 572 A1**
(43) Date of publication of application: **27.09.2017**
(21) Application number: 16161309.6
(22) Date of filing: 21.03.2016
(51) Int. Cl.: B65H 54/58, B60P 7/08

(54) **WINDER AND MANIPULATOR FOR SUCH A WINDER**

(71) Applicant: Buur Thunbo, Mogens, 4300 Holbaek (DK)
(72) Inventor: Buur Thunbo, Mogens, 4300 Holbaek (DK)
(74) Representative: Seppo Laine Oy

(57) **Abstract**

An improved manipulator (10) for a winder (100) for winding an object into a reel is proposed for speeding up winding straps into reels. The novel manipulator (10) features an axle (14) with a first axial end and a second axial end opposing the first axial end as well as a holder (15) provided to the first axial end for holding the object. The manipulator has a drive input interface provided to the second axial end of the axle (14) for facilitating drive of the axle (14). A stopper (16) has been provided to the axle (14) between the first and second axial end thereof so as to limit axial movement of the axle (14) in a surrounding carrier (20).

## Description

### FIELD

The present disclosure relates to handling thin and flexible sheets. In particular, the disclosure relates to reeling elongated pliable objects, such as cargo restraining straps, into rolls. More specifically, the present disclosure relates to a manipulator according to the preamble portion of claim 1 and to a winder according to the preamble portion of claim 10.

### BACKGROUND

Cargo straps, as an example of elongated pliable objects, are typically stored in a reeled configuration for easy handling and volumetric efficiency. To assist reeling, tools have been created to minimize the amount of labour associated with winding a strap into a reel. US 3954226, for example, proposes a reeling device including a spool having a splitted end for receiving the strap to be reeled and a crank at the other end. A handle is slid onto the spool, which may rotate in the center bore of the handle. The handle features a radially extending shield for acting as a stopper, against which the reeled strap may rest. By sliding the handle off the spool, the strap reel is also removed from the spool in a reeled configuration.

While known strap winders do speed up the winding of straps, they tend to suffer from managing the path of the strap during winding. For example, as one hand is rotating the spool and the other is holding the handle, the strap is being wound on the spool in an uncontrolled manner thus increasing the risk of a layer of the reel dropping off from the spool and prolonging the process.

It is therefore an aim to provide an improved winder, which will not only speed up winding straps into reels. It is a particular aim of certain embodiments to speed up winding of elongated pliable objects by improving the guidance of the path of said objects into reels.

### SUMMARY

The aim will be achieved with a novel a manipulator for a winder for winding an object, such as a strap, into a reel. The manipulator features an axle with a first axial end and a second axial end opposing the first axial end as well as a holder provided to the first axial end for holding the object. The manipulator has a drive input interface provided to the second axial end of the axle for facilitating drive of the axle. A stopper has been provided to the axle between the first and second axial end thereof so as to limit axial movement of the axle in a surrounding carrier.

On the other hand the aim will be achieved with a novel winder featuring such a manipulator.

The invention is defined by the features of the independent claims. Some specific embodiments are defined in the dependent claims.

Considerable benefits are gained with aid of the present solution. As the manipulator may easily be toggled between two operating positions, the object may be effortlessly guided with one hand to a tidy reel around the axle of the manipulator and just as easily removed from the manipulator simply by pulling the axle toward an ejecting position. The stopper ensures that the manipulator is not completely removed by a carrying structure.

### BRIEF DESCRIPTION OF THE DRAWINGS

FIGURE 1 illustrates an isometric view of a winder in accordance with at least some embodiments of the present invention;
FIGURE 2 illustrates an explosion view of the winder of FIGURE 1;
FIGURE 3 illustrates a top view of the winder of FIGURE 1 in a reeling configuration, and
FIGURE 4 illustrates a top view of the winder of FIGURE 1 in an ejecting configuration.

### DETAILED DESCRIPTION OF EXEMPLARY EMBODIMENTS

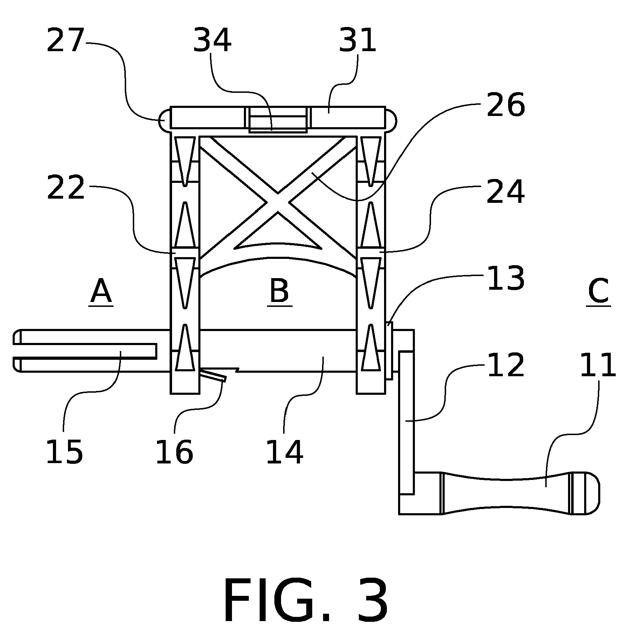

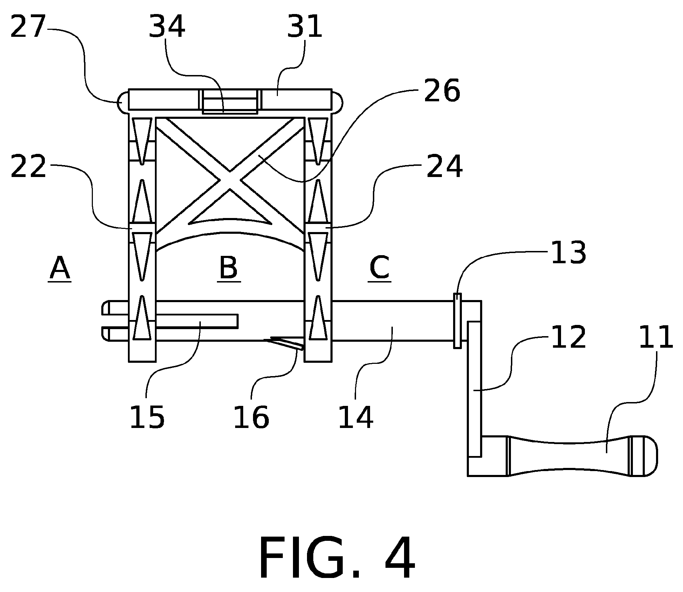

In essence, the embodiments benefit from a novel concept of winding a reel on the outside of the winder with a novel manipulator. The manipulator is advantageously designed to be manipulated between a winding position (FIGURE 3), in which the object may be wound outside the device against an abutment surface, and an ejecting position (FIGURE 4), where the completed reel may be easily collected from the manipulator. In general terms, the proposed device may be used to wind any elongated and pliable objects, such as straps, flat hoses, lashes, etc. A particular application, however, is winding cargo restraining straps. It should therefore be noted that while the embodiments are here after described with reference to straps particularly, the same principles will apply to winding any elongated pliable objects.

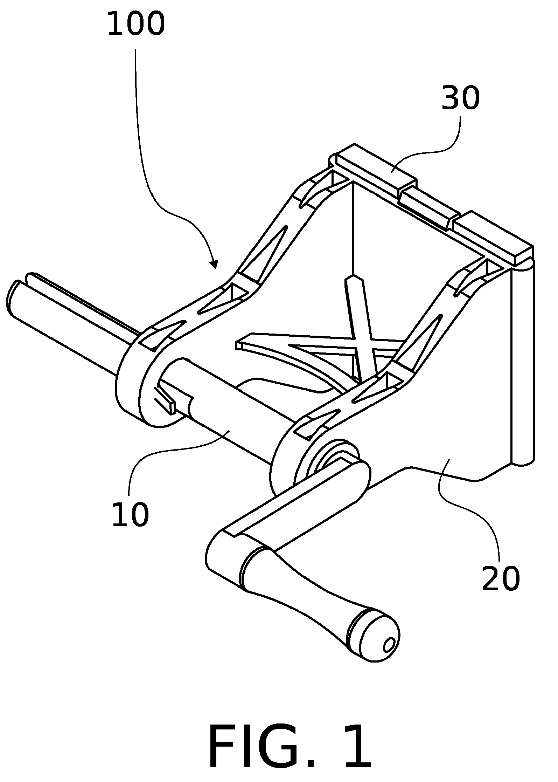

A winder 100, particularly strap winder, according to one embodiment is shown in FIGURE 1. Overall, the strap winder 100 for winding a strap into a reel includes three major components: the manipulator 10 for manipulating the strap, a carrier 20 for carrying the manipulator 10 and an optional mount 30 for facilitating easy installation of the strap winder 100.

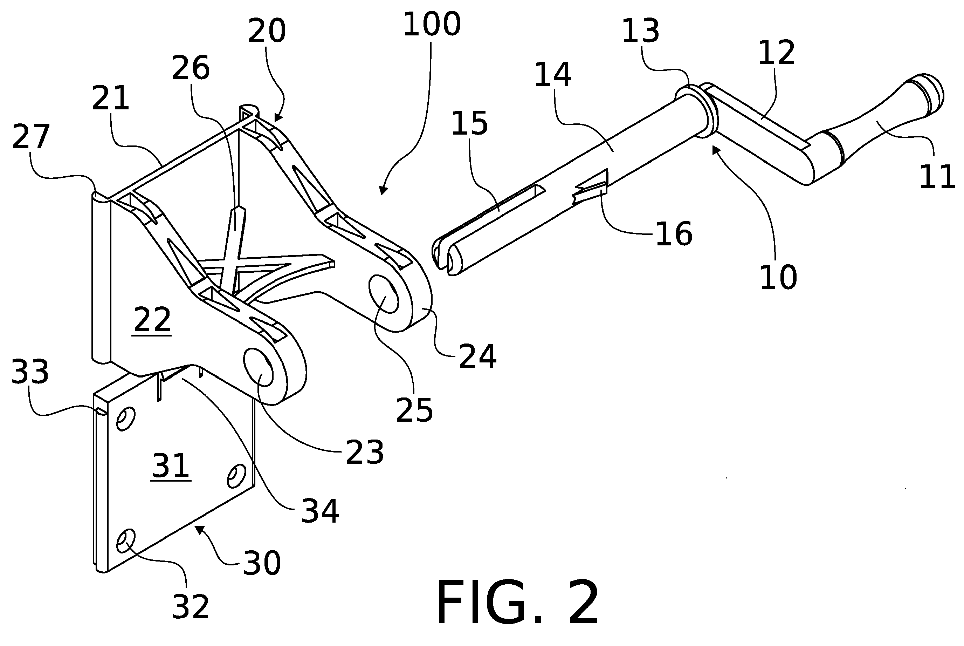

The components are shown in an exploded view in FIGURE 2, where the features of the device are shown in greater detail. Let us turn first to the carrier 20. The carrier 20 includes a body 21 as well as two supports 22, 24 protruding from the body 21 in parallel. The supports 22, 24 are arranged to opposite ends of the body 21, which may have a reinforcement 26 in the form of cross-members, for example, connecting the supports 22, 24 for improving rigidity. The first support 22 has a circumferential carrying surface 23, which is rotationally symmetrical about an axis of rotation of the manipulator 10. The second support 24 has a circumferential carrying surface 25, which is rotationally symmetrical about the same axis of rotation. The first and second support 22, 24 are distanced from each other over a distance along the axis of rotation. In the illustrated example the circumferential carrying surfaces 23, 25 are circular openings in the first and second supports 22, 24, but also simple open-top holding grooves could work. In any case the first and second support 22, 24 are configured to receive the manipulator 10 along the circumferential carrying surfaces 23, 25, which therefore support the manipulator 10 such to allow the axle 14 to undergo rotation about and translation along the axis of rotation in respect to the circumferential carrying surfaces 23, 25 of the first and second support 22, 24.

The body 21 of carrier 20 is designed to be easily installed to a receiving structure, such as a wall. In the illustrated example, the body 21 of the carrier 20 is shaped to engage a separate mount 30, which is permanently fixed to a wall, for example. Alternatively, the body could feature a clamp, Velcro band, a vice or any other gripping device for removably attaching the carrier to a structure. Alternatively, the body could simply feature through holes for a screw attachment. In the illustrated example, however, a light and substantially flat mount 30 is provided so as to permanently attach a non-protrusive element to the receiving structure, whereby the device may be dis-assembled when not in use with minimal interference. Such a solution is particularly suitable for cargo spaces of vehicles, where the walls should be kept as flat as possible. The mount 30 therefore has a simple planar body 31, which is provided with through holes 32 for attachment to the receiving structure and a guide 33 for attachment to the carrier 20. The carrier 20, on the other hand, has been provided with respective guides 27 so that the carrier 20 may be slid onto the mount 30 via the cooperating guides 27, 33. To secure the carrier 20 to the mount 30, a quick coupling 34 in the form of a resilient claw has been provided to the top of the body 31 of the mount 30 to provide for a removable snap-on installation.

Let us turn now to the manipulator 10. The manipulator 10 has an axle 14 extending between a first axial end, which in FIGURE 2 is nearer, and a second axial end, which in FIGURE 2 is farther. In this context, the term *axial* refers to the primary extension dimension of the axle 14, which is generally elongated along a dimension. Said dimension is the axial dimension in this context. Accordingly, said dimension defines the axial dimension for the carrier 20, the carrying surfaces 23, 25 of which are aligned with the axial dimension, when device is in use. The first axial end of the manipulator 10, i.e. the front end, is intended for interaction with the strap, whereas the second axial end of the manipulator 10, i.e. the back end, is intended for interaction with a sort of rotation means. Indeed, rotation of the manipulator 10 is rotation about the axial dimension.

The axle 14 and the supports 22, 24 of the carrier 20 are designed to cooperate so that the axle 14 may be slid through the carrying surfaces 23, 25 along the axial dimension of the axle 14 and rotated once in place. A holder 15 for holding the strap during winding has been provided to the first axial end. The holder 15 holds an end of the strap so as to form the core of the reel. In the illustrated example the holder 15 is a simple splice in the axle 14 for receiving the strap axially and through the axle 14, whereby engagement between the axle 14 and the strap is based on friction. Alternatively, the holder could take the form of a different opening, such as a through hole of a closed-end axle, a clamp or similar affixer designed to couple an elongated and supple material to the axle (not shown).

At the second axial end of the axle 14 there is a drive input interface for facilitating drive of the axle 14. In the illustrated example the drive input interface takes the form of a crank 12 that extends from the axle 14 at least partially, preferably entirely, radially. The crank 12 terminates to a handle 11, which extends orthogonally from the crank 12 and therefore in parallel to the axle 14. The handle 11 may be bearing mounted onto the crank 12 for ease of use. Alternatively, the drive input interface could be provided through form-fitting inter-engagement between a shape in the axle 14 and a reversed shape in a driver of some sort (not shown). For example the second axial end surface of the axle could feature a rotationally non-symmetric shape, such as a hex socket, a wrench socket or similar to receive a drive from an auxiliary device, such as drill or similar drive. Alternatively, the second axial end of the axle 14 could be provided with a coupled drive mechanism, such as a pulley-belt-drive for powered drive. Manual drive is, however, preferred for weight and robustness.

Provided between the two axial ends of the axle 14 is a stopper 16. The stopper 16 is configured to limit the axial movement of the axle 14 in the surrounding carrier 20. The stopper 16 has two configurations; a deployed and a retracted configuration. In the deployed configuration shown in FIGURE 2, the stopper 16 extends from the axle 14 at least partly radially over a first radial distance. In its retracted configuration (not shown), the stopper 16 is retracted from the deployed configuration. The retraction could be minute, wherein the stopper 16 merely extends from the axle 14 over a second radial distance, which is smaller than the first radial distance. Alternatively the degree of retraction could be more substantial, wherein the stopper 16 lies flush with the axle 14. Naturally, the degree of retraction may be something between these two extremes. In the simple illustrated example, the stopper 16 takes the form of an elastically deformable member, namely a tab, which protrudes from the axle 14 in the deployed configuration (shown in FIGURE 2) and which is configured to be bent elastically to the retracted configuration (not shown). The tab 16 extends preferably in a slanted angle that opens towards the second end of the manipulator 10, whereby the manipulator 10 may be easily inserted through the openings in the carrier 20. To facilitate the retracted configuration, the axle 14 has a recess for receiving the stopper 16 into the retracted configuration so as to be flush with the outer surface of the axle 14. When in the original deployed configuration (shown in FIGURE 2), the stopper 16 is able to undergo elastic deformation upon insertion of the non-assembled manipulator 10 along the axial dimension through the openings in the carrier 20. Accordingly, the carrying surfaces 23, 25 force the stopper 16 into the retracted configuration and therefore into the recess during translation of the axle 14 along the axial dimension into position in the carrier 20 shown in FIGURE 1. During said insertion (translation) and when the stopper 16 has passed through the opening in the second support 24 having been pushed briefly into the retracted configuration, the stopper 16 returns into the deployed configuration by elastic deformation. The manipulator 10 and the carrier 20 are preferably dimensioned such that the stopper 16 does not impede rotation of the axle 14 by rubbing against the first support 22. To limit the length of translation of the axle 14 along the axial dimension, a flange 13 has been provided near the second end of the axle 14 to as a limiter. The flange 13 engages the outer surface of the second support 24, when the manipulator 10 has been fully inserted into the carrier 20.

By virtue of the novel design, installation and use of the device is very straightforward. For installation, the mount 30 is attached to a receiving structure, such as a wall, by driving screws or similar attaching means through the openings 32 in the body 31. Once the mount 30 has been attached, the carrier 20 is snapped into place by aligning the guides 27, 33 on the bodies 21, 31 of the carrier 20 and mount 30 and sliding the carrier 20 towards the mount 30 until the quick coupling 34 has yielded back to its original position and grabbed the (upper) edge of the body 21 of the carrier. The manipulator 10 is then introduced into the carrier 20 by first aligning the axle 14 with the openings in the supports 22, 24 of the carrier 20 defined by the carrying surfaces 23, 25. The manipulator 10 is then pushed into position by pushing the axle 14 through the supports 22, 24 until the limiter 13 engages the second support 24 (FIGURES 1 and 3).

With the manipulator 10 in place, the strap winder 100 is ready for winding straps into reels. With reference to FIGURE 3 it may be noted that the strap winder 100 defines three spaces. The supports 22, 24 define an intermediate space B between the supports 22, 24, in which intermediate space B the stopper 16 is free to move axially by being limited on the one hand by limiter 13 to the winding position shown in FIGURE 3 and on the other hand to the ejecting position shown in FIGURE 4 by its own radial extension. In other words, the supports 22, 24 isolate the intermediate space B from a first lateral space A, which is on the outside of the strap winder 100 on the first support's 22 side, and from a second lateral space C, which is on the outside of the strap wider 100 on the second support's 24 side.

In the winding position shown in FIGURE 3, the axle 14 has been translated to an extreme position, where the first axial end of the axle 14 extends from the first support 22 into the first lateral space A so as to expose the holder 15 for winding the strap in the first lateral space A. With the holder 15 exposed, the strap may be attached to the manipulator 10 by feeding and end of the strap through the axle 14. After the strap has been coupled to the axle 14, the manipulator 10 may be rotated about the axle 14 by turning the crank 12 from the handle 11 or by another drive (not shown). The sliding fit between the axle 13 and the carrier 20 enables free rotation. After the strap has been wound into a reel, the completed reel is ready to be collected on the outside of the strap winder 100, namely in the first lateral space A. The first support 22 acts as an abutment surface and a guide for ensuring that the strap is wound into an even reel.

The reel may then be removed from the strap winder 100 by pulling the manipulator 10 into the ejecting position shown in FIGURE 4. In the ejected position, the first axial end of the axle 14 is retracted from the winding position towards the second support 24 so as to retract the holder 15 from the strap reel for ejecting the strap reel from the axle 14. The reel may now drop from the axle 14. The translation of the axle 14 along its axial dimension is limited by the stopper 16, which engages the inner surface of the second support 24. The strap winder 100 may then be used to wind another strap by returning the manipulator 10 to the winding position (FIGURE 3) by pushing it along the axial dimension or disassembled by pulling the manipulator 10 toward the second lateral space C - i.e. toward the second axial end of the axle 14 - and by releasing the axle 14 from the second support 24 by pushing the stopper 16 into the retracted configuration. The carrier 20 may be left in place or removed.

The illustrated embodiment could be varied in several different ways to achieve the same result. The stopper, for example, would be provided with a latching button-like member, which pushed in one position could be flush with the axle and pushed against a biasing spring would pop up to a protruding position (not shown). Alternatively, the stopper could be a removable member (not shown) that would be snapped onto a designated location along the axle for stopping the axial movement of the axle to a particular axial position. Also, the carrier could be made up of independent carrying members that could be hanged from a ceiling, for example. In such an embodiment, the usability of the device would be jeopardized, but successive loops could provide a somewhat similar function as the carrier depicted above.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

**REFERENCE SIGNS LIST**

| | |
|---|---|
| 10 | manipulator |
| 11 | handle |
| 12 | crank |
| 13 | flange |
| 14 | axle |
| 15 | splice |
| 16 | stopper |
| 20 | carrier |
| 21 | body |
| 22 | first support |
| 23 | circumferential carrying surface |
| 24 | second support |
| 25 | circumferential carrying surface |
| 26 | reinforcement |
| 27 | guide |
| 30 | mount |
| 31 | body |
| 32 | hole |
| 33 | guide |
| 34 | quick coupling |
| 100 | strap winder |
| A | first lateral external space |
| B | intermediate space |
| C | second lateral external space |

### CITATION LIST

US 3954226

## Claims

1. A manipulator (10) for a winder (100) for winding an object into a reel, the manipulator (10) comprising an axle (14) with:
- a first axial end,
- a second axial end opposing the first axial end,
- a holder (15) provided to the first axial end for holding the object, and
- a drive input interface provided to the second axial end of the axle (14) for facilitating drive of the axle (14),
**characterized by** a stopper (16) provided to the axle (14) between the first and second axial end thereof so as to limit axial movement of the axle (14) in a surrounding carrier (20).

2. The manipulator (10) according to claim 1, wherein the manipulator (10) comprises:
- a crank (12) provided to the second axial end of the axle (14) so as to extend there from at least partially radially, and
- a handle (11) provided the crank (12).

3. The manipulator (10) according to claim 1 or 2, wherein the stopper (16) is configured to be manipulated between:
- a deployed configuration, in which the stopper (16) extends from the axle (14) at least partly radially over a first radial distance, and
- a retracted configuration, in which the stopper (16) is retracted from the deployed configuration to:
o extend from the axle (14) over a second radial distance, which is smaller than the first radial distance, or to
o lie flush with the axle (14).

4. The manipulator (10) according to any of the preceding claims, wherein the stopper (16) comprises an elastically deformable member, which protrudes from the axle (14) in the deployed configuration and which is configured to be bent elastically to the retracted configuration.

5. The manipulator (10) according to claim 4, wherein the stopper (16) is an elastic tab.

6. The manipulator (10) according to claim 4 or 5, wherein the axle (14) comprises a recess for receiving the stopper (16) into the retracted configuration so as to be flush with the outer surface of the axle (14).

7. The manipulator (10) according to any of the preceding claims, wherein the holder (15) is configured to hold an end of the object so as to form the core of the reel.

8. The manipulator (10) according to any of the preceding claims, wherein the holder (15) comprises an opening in the axle (14), such as a splice, for receiving the object through the axle (14).

9. The manipulator (10) according to any of the preceding claims, wherein the object is a strap.

10. A winder (100) for winding an object into a reel, the winder (100) comprising:
- a manipulator (10) including an axle (14) with:
o a first axial end,
o a second axial end opposing the first axial end,
o a holder (15) provided to the first axial end for holding the eobject, and
o a drive input interface provided to the second axial end of the axle (14) for facilitating drive of the axle (14), and
- a carrier (20) for holding the axle (14) of the manipulator (10), which carrier (20) includes:
o a first support (22) having a circumferential carrying surface (23), which is rotationally symmetrical about an axis of rotation, and
o a second support (24) having a circumferential carrying surface (25), which is rotationally symmetrical about the axis of rotation and which second support (24) is distanced from the first support (22) over a distance along the axis of rotation,
wherein the manipulator (10) is configured to be supported by the carrier (20) so as to allow the axle (14) to rotate about and translate along the axis of rotation in respect to the circumferential carrying surfaces (23, 25) of the first and second support (22, 24),
**characterized in that** the manipulator (10) comprises a stopper (16), which is provided to the axle (14) between the first and second axial end thereof so as to limit translation of the axle (14) along the axis of rotation.

11. The winder (100) according to claim 10, wherein the first and second support (23, 24) define an intermediate space (B) between a first and second lateral external space (A, C).

12. The winder (100) according to claim 10 or 11, wherein:
- the first support (22) separates the first lateral external space (A) from the intermediate space (B), and wherein
- the second support (24) separates the second lateral external space (C) from the intermediate space (B).

13. The winder (100) according to any of the preceding claims 10 to 12, wherein the axle (14) of the manipulator is configured to be translated along the axis of rotation between:
- a winding position, in which the first axial end of the axle (14) extends from the first support (22) into the first lateral space (A) so as to expose the holder (15) for winding the object in the first lateral space (A), and
- an ejecting position, in which the first axial end of the axle (14) is retracted from the winding position towards the second support (24) so as to retract the holder (15) from the object reel for ejecting the object reel from the axle (14).

14. The winder (100) according to claim 13, wherein the stopper (16) is configured to limit the translation of the axle (14) past the ejecting position by engaging with the second support (24) upon translation of the axle (14) from the winding position towards the ejecting position.

15. The winder (100) according to any of the preceding claims 10 to 14, wherein carrier (20) comprises a body (21) from which the first and second support (22, 24) configured to protrude in parallel to each other.

16. The winder (100) according to any of the preceding claims 10 to 15, wherein the winder (100) comprises:
- a mount (30), which is configured to be fixed to an external structure and to receive the carrier (20) in a detachable manner, and
- a quick coupling (34) provided to the mount (30) or carrier (20) so as to establish a detachable connection there between,
whereby the mount (30) may be permanently attached to the external structure, such as a wall of a cargo space of a vehicle, and whereby the carrier (20) may be removably attached to the mount (30) for enabling assisted reeling of objects.

17. The winder (100) according to claim 16, wherein the mount (30) comprises a platelike body (31) having a first mounting interface (32) for fixed attachment to the external structure and a second mounting interface (33) for a form fitting and removable attachment with the carrier (20) comprising a corresponding mounting interface (27)

18. The winder (100) according to any of the preceding claims 10 to 17, wherein the manipulator (10) is in accordance with any of the preceding claims 1 to 8.

19. The winder (100) according to any of the preceding claims 10 to 18, wherein the object is a strap and wherein the winder (100) is a strap winder.
